# EUROPEAN PATENT SPECIFICATION

(11) **EP 2 371 519 B1**
(45) Date of publication and mention of the grant of the patent: **25.04.2018**
(21) Application number: 11002463.5
(22) Date of filing: 24.03.2011
(51) Int. Cl.: B29C 47/92, B29C 47/08, B29C 47/10, B29C 47/38

(54) **Startup control method and startup control device of resin extruder**
Startsteuerungsverfahren und Startsteuerungsvorrichtung einer Harzstrangpresse
Procédé de contrôle de démarrage et dispositif de contrôle de démarrage d'extrudeuse de résine

(30) Priority: 30.03.2010 JP 2010076526
(43) Date of publication of application: 05.10.2011
(73) Proprietor: YKK Corporation, Tokyo 101-8642 (JP)
(72) Inventor: Matsuda, Koji, Kurobe-shi Toyama 938-8601 (JP)
(74) Representative: Busch, Thomas

(56) References cited:
- JP-A- 10 109 354
- JP-A- 2000 071 316
- US-A1- 2008 099 942
- Skip Thacker: "PVC Pipe extrusion Start-up Procedure", www.plastics.com , 4 August 2007 (2007-08-04), pages 1-3, XP002693469, Retrieved from the Internet: URL:http://www.plastics.com/content/articl es/17/1/PVC-Pipe-Extrusion-Start-up-Proced ure/Page1.html [retrieved on 2013-03-07]

## Description

### BACKGROUND

The present invention relates to a control method at the time of startup from the starting of a resin extruder to a set extrusion state, and a startup control device for implementing the startup control method according to independent claims 1 and 4. As resin extruders, there is an extruder which kneads and compresses while heating a supplied resin material using the rotation of a screw, thereby extruding the molten resin toward a die.

For example, as disclosed in Patent Document 1, JP-A-8-66956, there is known a resin extruder which is adapted such that a screw shaft is rotatably provided within a barrel, the barrel is provided with a supply section and a heating plate, a resin material supplied from the supply section is kneaded and compressed while being heated using the rotation of the screw shaft, the molten resin is extruded toward a die from a mouthpiece.

In the aforementioned resin extruder, it is known that the discharge amount (discharge amount per unit time) of the molten resin is determined by the supply amount (supply amount per unit time) of the resin material, and the resin pressure (pressure within the die) of the molten resin is determined by the rotational frequency (rpm) of the screw.

Additionally, in the aforementioned resin extruder, at the time of pause, the resin within the resin extruder may deteriorate, for example. Thus, when extrusion is started, the resin within the resin extruder is removed to make the inside of the resin extruder empty.

Additionally, the target discharge amount of the molten resin of the resin extruder is determined on the basis of experience depending on a resin-molded article to be extrusion-molded, i.e., a die, a resin material supply amount is set according to the target discharge amount, and the target rotational frequency of the screw is set such that the resin pressure of the molten resin does not exceed an allowable value.

As described above, when extrusion is started in a state where the inside of the resin extruder is empty, if the supply amount of the resin material is set to a value corresponding to the target discharge amount, and the screw is started at the target rotational frequency, problems occur in that the resin pressure is unstable, and the load of the resin extruder and the die increases beyond allowable values. Thus, conventionally, while an operator checks the resin pressure, the supply amount of the resin material and the rotational frequency of the screw are manually increased from a low state in a stepwise fashion, and startup is performed to a predetermined extrusion state with the target supply amount and target rotational frequency corresponding to the target discharge amount.

As described above, in the startup control in which the supply amount of the resin material and the rotational frequency of the screw are increased in a stepwise fashion to obtain the target supply amount and target rotational frequency corresponding to the target discharge amount, the time until the target supply amount and the target rotational frequency are reached, i.e., the startup time until a predetermined extrusion state is obtained becomes long.

Accordingly, extrusion work efficiency deteriorates, and the waste amount of the molten resin which does not become a molded article (the amount of the molten resin which is wasted) increases.

Moreover, since the startup control is manual control by an operator, operator skill is required, the resin pressure of the molten resin is unstable, the load to the resin extruder and the die is large, and stable startup cannot be performed.

JP 10 109354 A, JP 2000 071316 A, Skip Thacker: "PVC Pipe extrusion Start-up Procedure", www.plastics.com, 4 August 2007 (2007-08-04), pages 1-3, XP002693469, and US 2008/099942 A1 are related to the field of resin-extruding and in particular disclose resin extruders and also startup control methods for resin extruders.

### SUMMARY

It is therefore an object of at least one embodiment of the present invention to provide a startup control method of a resin extruder and a startup control device of a resin extruder which can automatically achieve startup in a short time.

In order to achieve the above-described object, according to an aspect of the embodiments of the present invention, there is provided a startup control method, having the features of claim 1, of a resin extruder 1 that extrudes supplied resin material to a die 4 as molten resin by rotating a screw 2, the startup control method comprising: supplying the resin material with a low supply amount which is smaller than a target supply amount and rotating the screw 2 at a low rotational frequency which is smaller than a target rotational frequency when starting the resin extruder; gradually increasing a supply amount of the resin material and a rotational frequency of the screw 2; and bringing the supply amount of the resin material into a target supply amount and bringing the rotational frequency of the screw 2 into a target rotational frequency after elapse of a set startup time.

With this configuration, when the resin extruder 1 is brought into an extrusion state from a pause state, the supply amount of the resin material and the rotational frequency of the screw 2 can be automatically set to the target supply amount and the target rotational frequency in a short time.

Accordingly, the startup can be automatically performed in a short time, the extrusion work efficiency can be improved, and the waste amount of the molten resin which does not become a molded article can be reduced, operator skill is not required, and stable startup control can be performed.

The startup control method may further comprise inputting: a die number of a die 4 to be attached to the resin extruder 1; and the target supply amount of the resin material, the target rotational frequency of the screw 2, the low supply amount when starting, the low rotational frequency when starting, and the startup time, when performing extrusion molding with the die 4 to a controller 20, wherein the controller 20 controls the supply amount of the resin material and the rotational frequency of the screw 2.

With this configuration, the startup of the resin extruder 1 can be controlled in a set state by inputting the die number, the target supply amount, the target rotational frequency, the low supply amount, the low rotational frequency, and the startup time to the controller 20.

In the startup control method, when gradually increasing the supply amount of the resin material to the target supply amount and gradually increasing the rotational frequency of the screw 2 to the target rotational frequency, the rotational frequency of the screw 2 is stopped from increasing if a resin pressure exceeds an allowable value.

With this configuration, it is possible to prevent the resin pressure from exceeding the allowable value and the load to the resin extruder 1 and the die 4 from increasing.

According to another aspect of the embodiments of the present invention, there is provided a startup control device, having the features of claim 4, comprising: a resin extruder 1 including a screw 2 rotated by a motor 5 and a charging section 3 of resin material, the resin extruder that extrudes molten resin to a die 4; a material supply device 10 that supplies the resin material to the charging section 3; and a controller 20 that outputs control commands to the motor 5 and a material supply section 12 of the material supply device 10 to control a supply amount of the resin material and a rotational frequency of the screw 2, wherein the controller 20 is provided with an input section 30 which inputs a target supply amount of the resin material, a target rotational frequency of the screw 2, a low supply amount when starting, a low rotational frequency when starting, and a startup time.

With this configuration, when the resin extruder 1 is brought into an extrusion state from a pause state, the supply amount of the resin material and the rotational frequency of the screw 2 can be automatically set to the target supply amount and the target rotational frequency in a short time.

Accordingly, the startup can be automatically performed in a short time, the extrusion work efficiency can be improved, and the waste amount of the molten resin which does not become a molded article can be reduced, operator skill is not required, and stable startup control can be performed.

In the startup control device may further comprise a pressure sensor 7 that detects a resin pressure of the molten resin and inputs the detected resin pressure to the controller 20, wherein the controller 20 has a function of stopping a speed-increasing command to the motor 5 if the resin pressure exceeds an allowable value when outputting the speed-increasing command to the motor 5.

With this configuration, it is possible to prevent the resin pressure from exceeding an allowable value when starting and the load to the resin extruder 1 and the die 4 from increasing.

### BRIEF DESCRIPTION OF THE DRAWINGS

In the accompanying drawings:
Fig. 1 is an explanatory view of a startup control device showing an embodiment of the invention; and
Fig. 2 is a graph showing changes in the supply amount of a resin material and the rotational frequency of a screw.

### DETAILED DESCRIPTION OF THE EMBODIMENTS

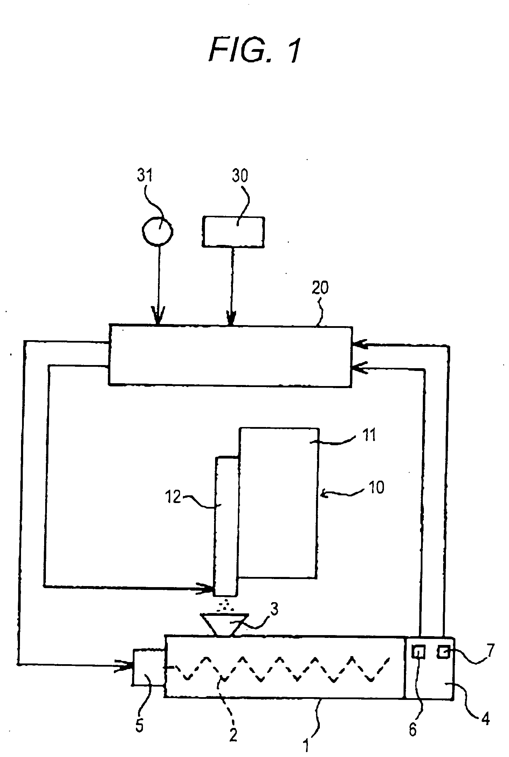

Fig. 1 shows a startup control device of the invention. The resin extruder 1 includes a screw 2, a resin material charging section 3, a heater (not shown), and the like, and kneads and compresses a powdery resin material supplied from the charging section 3 by the rotation of the screw 2 while being heated by the heater, thereby extruding the compressed molten resin toward the die 4.

The screw 2 is rotationally driven by the motor 5.

The die 4 is provided with a temperature sensor 6 which detects the temperature of the molten resin, and a pressure sensor 7 which detects the pressure of the molten resin.

The charging section 3 of the resin extruder 1 is supplied with a powdery resin material by a material supply device 10.

The material supply device 10 includes a tank 11 and a material supply section 12, and the supply amount is increased and decreased by controlling the material supply section 12.

As the material supply section 12, a so-called weight feeder is used. This weight feeder can adjust the supply amount depending on the weight to be supplied per unit time.

The motor 5 and the material supply section 12 are controlled by a control signal from a controller (sequencer) 20 to increase and decrease the rotational frequency (rpm) of the screw 2 and the supply amount (kg/h) of a resin material.

The detected temperature of the temperature sensor 6 and the detected pressure of the pressure sensor 7 are input to the controller 20.

Extrusion molding conditions are input to the controller 20 by an input means 30.

The extrusion molding conditions are the target supply amount of the molten resin corresponding to the target discharge amount of the molten resin when a resin-molded article is extrusion-molded, the target rotational frequency of the screw, startup control data, and the like.

The discharge amount is the amount which is extruded toward the die 4 by the rotation of the screw 2 and extruded to the outside from the die 4, and the supply amount is the amount which is supplied to the resin extruder 1 from the weight feeder.

For example, the extrusion molding conditions are the die number of a die attached to the resin extruder 1, the target supply amount of the resin material when being extrusion-molded using the die, the target rotational frequency of the screw, and the startup control data.

As the methods of inputting the extrusion molding conditions, there are various methods, such as a method of inputting the number of a die, target supply amount, target rotational frequency, and startup control data to the controller 20 when die replacement is performed, a method of inputting a plurality of extrusion molding conditions in advance to the input means 30, and inputting the number of a die to the input means 30, target supply amount, target rotational frequency and startup control data, which correspond to the number of the die, to the controller 20, and a method of inputting a plurality of extrusion molding conditions in advance to the controller 20, and a method of inputting the number of a die from the input means 30, thereby selecting the target supply amount, target rotational frequency, and startup control data, which correspond to the number of the die.

Even in any input method, the controller 20 performs a control on the basis of the target supply amount, target rotational frequency, and startup control data, which correspond to a die to be used.

The target discharge amount of the molten resin is set on the basis of experience according to the resin-molded article to be extrusion-molded as described above, i.e., a die to be used, and the target supply amount of the resin material is set on the basis of this.

The target rotational frequency of the screw is set on the basis of the target discharge amount (target supply amount), and resin pressure.

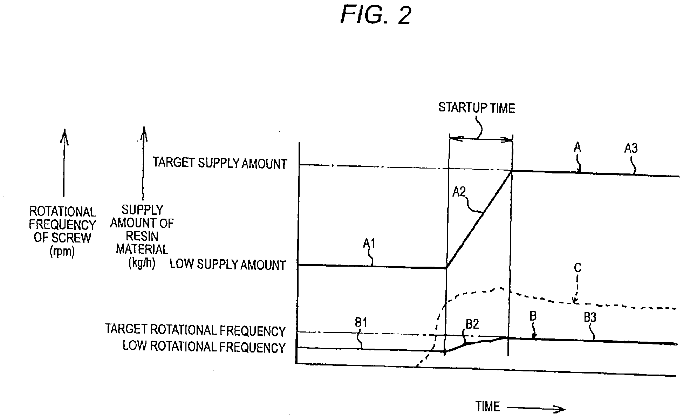

As shown in Fig. 2, the startup control data has starting data which starts with a low supply amount and a lower rotational frequency corresponding to a low discharge amount, and startup data which starts up to the target supply amount and target rotational frequency corresponding to the target discharge amount from the low supply amount and the low rotational frequency.

The low supply amount and low rotational frequency corresponding to the low discharge amount of the starting data in the startup control data are significantly lower than the target supply amount and target rotational frequency corresponding to the target discharge amount, and the resin pressure of the molten resin is set so as to not exceed an allowable value.

Since the startup time for which the supply amount of the resin material starts up to the target supply amount from the low supply amount, and the startup time for which the rotational frequency of the screw starts up to the target rotational frequency from the low rotational frequency are different depending on the resin material characteristics, die characteristics, and resin extruder characteristics, an optimal startup time is determined by experiments, and an optimal startup time is set according to the number of a die described above.

In Fig. 2, the supply amount of the resin material is shown by a line A, and the rotational frequency of the screw is shown by a line B.

Also, portions of A1 and B1 show when starting, portions of A2 and B2 show at the time of startup control, and portions of A3 and B3 show when target values are reached.

Additionally, a line C shows the resin pressure.

Next, a startup control method of the invention will be described.

The resin extruder 1 is paused, and the die 4 is replaced.

The number of the replaced die 4, the target supply amount of the resin material, the target rotational frequency of the screw, and the startup control data are input to the controller 20, respectively.

The startup control data are the low supply amount, the low rotational frequency, and the startup time as described above.

By inputting a starting signal to the controller 20 by a starting means 31, the controller 20 input a low-speed driving signal to the motor 5, thereby driving the motor 5 at low speed, and rotating the screw 2 at the aforementioned low rotational frequency.

Simultaneously with this, the controller 20 inputs a low supply amount signal to the material supply section 12, and supplies a resin material to the resin extruder 1 by the aforementioned low supply amount.

Simultaneously with this, as heating is performed by applying an electric current to the heater of the resin extruder 1, the inside of the resin extruder 1 is filled with molten resin.

That is, when starting (A1, B1), the startup control method of the invention supplies the resin material to the resin extruder 1 with the low supply amount smaller than the target supply amount, and rotates the screw 2 at the low rotational frequency smaller than the target rotational frequency.

Then, if the inside of the resin extruder 1 is full of the molten resin, the supply amount of the resin material and the rotational frequency of the screw are gradually increased so as to reach an extrusion state with the target supply amount and the target rotational frequency in a set startup time. When the temperature detected by the temperature sensor 6 reaches a set temperature, it is determined that the molten resin is full, and the controller 20 outputs a speed-increasing command to the motor 5, thereby gradually increasing the rotational frequency of the screw 2, and outputs an amount-increasing command to the material supply section 12, thereby gradually increasing the supply amount of the resin material.

Otherwise, a change in the torque applied to the rotation of the screw 2 is monitored, and whether or not the inside of the resin extruder 1 is full of the molten resin is confirmed from the change. For example, the change in torque is also a change in the value of an electric current to the electric motor 5 for the rotation of the screw 2, and it can be seen that the molten resin has been filled by monitoring the value of an electric current using the controller 20 or the like. In addition, gradually increasing the rotational frequency of the screw 2 and the supply amount of the resin material means increasing gradually with respect to the time on the horizontal axis. This ever increasing may increase so as to draw a curve, not limited to a gradually increasing straight line indicated in Fig. 2. In the present invention, in any case, gradual increase means not an abrupt increase with respect to time elapsed, for example, a stepwise increase having a large difference in the supply amount before and after a certain time, but a continuous increase.

When the startup control is performed as described above, the resin pressure is input to the controller 20 from the pressure sensor 7, and when the resin pressure reach a preset allowable value or more, the controller 20 stops a speed-increasing command to the motor 5 so that the rotational frequency of the screw 2 does not increase.

Thereby, since the resin pressure does not reach the allowable value or more for a long time, the resin extruder 1 and the die 4 are not damaged.

That is, when the controller 20 outputs a speed-increasing command to the motor 5, thereby gradually increasing the rotational frequency of the screw 2, the controller functions to stop the speed-increasing command if the input resin pressure exceeds an allowable value and to maintain the rotational frequency of the screw 2 at that time.

In the startup control, a target supply amount A3 and a target rotational frequency B3 are set. In order to perform startup to the stetting values, a low supply amount A1 and a low rotational frequency B1 are taken until the inside of the resin extruder 1 is full of the molten resin from starting. At this time, the low rotational frequency B1 is taken with respect to the low supply amount A1 in order to prevent a sudden pressure from being applied to the die 4 when the resin is reliably molten and full. Then, after the molten resin has been filled, the supply amount of the weight feeder and the rotational frequency of the screw are controlled by the controller 20 so as to reach the target supply amount A3 and the target rotational frequency B3. In Fig. 2, a change in resin pressure by the sensor 7 is indicated y the line C. As indicated in Fig. 2, it can be seen that, since the resin pressure is increasing before boundary points between A1 and A2 and between B1 and B2, the inside of the extruder 1 is full of the molten resin. In the present embodiment, in order to reliably obtain a full state, the startup control is performed after the elapse of a predetermined time from an increase in the resin pressure C.

After the above boundary points, the supply amount is gradually increased as indicated by the supply amount A2, and a control is performed by the controller 20 such that the rotational frequency B2 is also increased.

At this time, the sensor 7 monitors whether the resin pressure is lower than a set allowable value (does not become an allowable value or more). In the present embodiment, since the rotational frequency increases with an increase in the supply amount, as indicated in Fig. 2, the resin pressure C can be reliably controlled without being increased suddenly. At this time, the discharge amount from the die 4 also increases gradually.

Thereafter, a molded article corresponding to the shape of the die 4 is extrusion-molded from the die 4 after completion of the startup control in which the predetermined rotational frequency of the screw 2 and the predetermined supply amount of the resin material are obtained.

When the speed-increasing command to the motor 5 is stopped, a load cell is provided on the side of the screw 2 opposite to the die 4 in addition to providing the pressure sensor 7 in the die 4. Thereby, the back pressure applied to the screw 2 can be monitored, and the allowable value of the back pressure can also be set.

Additionally, the temperature sensor 6 can also detect the temperature of the die 4 in addition to the temperature of the molten resin. Moreover, in addition to the above examples, the rotational frequency of the screw 2 or the supply amount of the resin can be changed by the temperature detected by the temperature sensor 6. For example, changes are made such that, if the temperature is low, the rotational frequency is made low to melt the resin reliably, or if the temperature is high, the rotational frequency is made high or the temperature is made low so as to increase the supply amount of the resin.

## Claims

1. A startup control method of a resin extruder (1) that extrudes supplied resin material to a die (4) as molten resin by rotating a screw (2), the startup control method comprising:
supplying the resin material with a low supply amount which is set to be smaller than a target supply amount and rotating the screw (2) at a low rotational frequency which is set to be smaller than a target rotational frequency when starting the resin extruder (1), until an inside of the resin extruder (1) is filled with the resin material;
gradually increasing a supply amount of the resin material and a rotational frequency of the screw (2), after the inside of the resin extruder (1) is filled with the resin material; and
bringing the supply amount of the resin material into a target supply amount and bringing the rotational frequency of the screw (2) into a target rotational frequency after elapse of a set startup time,
wherein whether or not the inside of the resin extruder (1) is filled with the resin material is determined by detecting a temperature with a temperature sensor (6) or monitoring a change in a torque applied to a rotation of the screw (2).

2. The startup control method as set forth in claim 1, further comprising inputting:
a die number of a die (4) to be attached to the resin extruder (1); and the target supply amount of the resin material, the target rotational frequency of the screw (2), the low supply amount when starting, the low rotational frequency when starting, and the startup time, when performing extrusion molding with the die (4) to a controller (20),
wherein the controller (20) controls the supply amount of the resin material and the rotational frequency of the screw (2).

3. The startup control method as set forth in claim 1 or 2, wherein when gradually increasing the supply amount of the resin material to the target supply amount and gradually increasing the rotational frequency of the screw (2) to the target rotational frequency, the rotational frequency of the screw (2) is stopped from increasing if a resin pressure exceeds an allowable value.

4. A startup control device, comprising:
a resin extruder (1) including a screw (2) rotated by a motor (5) and a charging section (3) of resin material, the resin extruder (1) that extrudes molten resin to a die (4); a material supply device (10) that supplies the resin material to the charging section (3); and
a controller (20) that outputs control commands to the motor (5) and a material supply section (12) of the material supply device (10) to control a supply amount of the resin material and a rotational frequency of the screw (2); wherein the controller (20) is provided with an input section which inputs a target supply amount of the resin material, a target rotational frequency of the screw (2), a low supply amount which is set to be smaller than the target supply amount, a low rotational frequency which is set to be smaller than the target rotational frequency, and a startup time,
wherein when starting the resin extruder (1) until an inside of the resin extruder (1) is filled with the resin material, the controller controls the material supply device to supply the resin material with the low supply amount and controls the screw (2) to rotate at the low rotational frequency,
wherein after the inside of the resin extruder (1) is filled with the resin material, the controller gradually increases the supply amount of the resin material and the rotational frequency of the screw (2),
wherein after elapse of the set startup time, the controller (20) brings the supply amount of the resin material into the target supply amount and brings the rotational frequency of the screw (2) into the target rotational frequency, and
wherein whether or not the inside of the resin extruder (1) is filled with the resin material is determined by detecting a temperature with a temperature sensor (6) or monitoring a change in a torque applied to a rotation of the screw (2).

5. The startup control device as set forth in claim 4, further comprising a pressure sensor (7) that detects a resin pressure of the molten resin and inputs the detected resin pressure to the controller (20), wherein the controller (20) has a function of stopping a speed-increasing command to the motor (5) if the resin pressure exceeds an allowable value when outputting the speed-increasing command to the motor (5).

## Patentansprüche

1. Startsteuerungsverfahren für einen Harzextruder (1), der zugeführtes Harzmaterial als geschmolzenes Harz durch Drehen einer Schnecke (2) durch eine Düse (4) extrudiert, wobei das Startsteuerverfahren umfasst:
Zuführen des Harzmaterials mit einer geringen Zufuhrmenge, die kleiner als eine Sollzufuhrmenge eingestellt ist, und Drehen der Schnecke (2) mit einer niedrigen Drehfrequenz, die geringer als eine Solldrehfrequenz eingestellt ist, wenn der Harzextruder (1) gestartet wird, bis das Innere des Harzextruders (1) mit dem Harzmaterial gefüllt ist;
allmähliches Erhöhen einer Zufuhrmenge des Harzmaterials und einer Drehfrequenz der Schnecke (2), nachdem das Innere des Harzextruders (1) mit dem Harzmaterial gefüllt worden ist; und
Bringen der Zufuhrmenge des Harzmaterials auf eine Sollzufuhrmenge und Bringen der Drehfrequenz der Schnecke (2) auf eine Solldrehfrequenz nach dem Verstreichen einer eingestellten Anlaufzeit,
wobei durch Erfassen einer Temperatur mit einem Temperatursensor (6) oder Überwachen einer Änderung des auf die Drehung der Schnecke (2) ausgeübten Drehmoments bestimmt wird, ob das Innere des Harzextruders (1) mit dem Harzmaterial gefüllt ist oder nicht.

2. Startsteuerverfahren gemäß Anspruch 1, wobei das Verfahren weiterhin umfasst: Eingeben der Anzahl von Düsen (4), die an dem Harzextruder (1) befestigt werden sollen; und
der Sollzufuhrmenge des Harzmaterials, der Solldrehfrequenz der Schnecke (2), der geringen Zufuhrmenge beim Anlaufen, der niedrigen Drehfrequenz beim Anlaufen und der Anlaufzeit, wenn ein Extrusionsformen mit der Düse (4) durchgeführt wird, in eine Steuerung (20), wobei die Steuerung (20) die Zufuhrmenge des Harzmaterials und die Drehfrequenz der Schnecke (2) steuert.

3. Startsteuerverfahren gemäß Anspruch 1 oder 2, wobei, wenn die Zufuhrmenge des Harzmaterials allmählich auf die Sollzufuhrmenge erhöht wird und die Drehfrequenz der Schnecke (2) allmählich auf die Solldrehfrequenz der Schnecke (2) erhöht wird, verhindert wird, dass die Drehfrequenz der Schnecke (2) weiter zunimmt, wenn ein Harzdruck einen zulässigen Wert überschreitet.

4. Startsteuerungsvorrichtung, die umfasst:
einen Harzextruder (1) mit einer Schnecke (2), die von einem Motor (5) gedreht wird, und einem Beschickungsabschnitt (3) für Harzmaterial, wobei der Harzextruder (1) geschmolzenes Harz durch eine Düse (4) extrudiert;
eine Materialzufuhrvorrichtung (10), die das Harzmaterial an den Beschickungsabschnitt (3) zuführt; und
eine Steuerung (20), die Steuerbefehle an den Motor (5) und einen Materialzufuhrabschnitt (12) der Materialzufuhrvorrichtung (10) ausgibt, um eine Zufuhrmenge des Harzmaterials und eine Drehfrequenz der Schnecke (2) zu steuern;
wobei die Steuerung (20) mit einem Eingabeabschnitt versehen ist, der eingibt: eine Sollzufuhrmenge des Harzmaterials, eine Solldrehfrequenz der Schnecke (2), eine geringe Zufuhrmenge, die kleiner als die Sollzufuhrmenge eingestellt ist, eine niedrige Drehfrequenz, die kleiner als die Solldrehfrequenz eingestellt ist, und eine Anlaufzeit,
wobei, wenn der Harzextruder (1) gestartet wird, die Steuerung die Materialzufuhrvorrichtung dazu steuert, das Harzmaterial mit der geringen Zufuhrmenge zuzuführen, und die Schnecke (2) dazu steuert, sich mit der niedrigen Drehfrequenz zu drehen, bis das Innere des Harzextruders (1) mit dem Harzmaterial gefüllt ist,
wobei, nachdem das Innere des Harzextruders (1) mit dem Harzmaterial gefüllt worden ist, die Steuerung die Zufuhrmenge des Harzmaterials und die Drehfrequenz der Schnecke (2) allmählich erhöht,
wobei die Steuerung (20) die Zufuhrmenge des Harzmaterials auf die Sollzufuhrmenge bringt und die Drehfrequenz der Schnecke (2) auf die Solldrehfrequenz bringt, nachdem die eingestellte Anlaufzeit verstrichen ist,
wobei durch Erfassen einer Temperatur mit einem Temperatursensor (6) oder Überwachen einer Änderung des auf die Drehung der Schnecke (2) ausgeübten Drehmoments bestimmt wird, ob das Innere des Harzextruders (1) mit dem Harzmaterial gefüllt ist oder nicht.

5. Startsteuerungsvorrichtung gemäß Anspruch 4, die weiterhin einen Drucksensor (7) umfasst, der den Harzdruck des geschmolzenen Harzes erfasst und den erfassten Harzdruck in die Steuerung (20) eingibt,
wobei die Steuerung (20) eine Funktion aufweist zum Anhalten eines Geschwindigkeitserhöhungsbefehls an den Motor (5), wenn der Harzdruck einen zulässigen Wert überschreitet, wenn der Geschwindigkeitserhöhungsbefehl an den Motor (5) ausgegeben wird.

## Revendications

1. Procédé de contrôle de démarrage d'une extrudeuse de résine (1) qui extrude de la résine introduite sous la forme de résine fondue par rotation d'une vis (2) par le biais d'une filière (4), le procédé de contrôle de démarrage comprenant :
l'introduction de la résine avec une faible quantité d'introduction établie pour être inférieure à une quantité d'introduction cible et la rotation de la vis (2) à une basse fréquence de rotation établie pour être inférieure à une fréquence de rotation cible, au démarrage de l'extrudeuse de résine (1), jusqu'à ce que l'intérieur de l'extrudeuse de résine (1) soit rempli de résine,
l'augmentation progressive de la quantité d'introduction de la résine et de la fréquence de rotation de la vis (2), après que l'intérieur de l'extrudeuse de résine (1) s'est rempli de résine, et
le passage de la quantité d'introduction de la résine à une quantité d'introduction cible et le passage de la fréquence de rotation de la vis (2) à une fréquence de rotation cible une fois le terme d'une durée de démarrage définie atteint ;
dans lequel le remplissage ou non de l'intérieur de l'extrudeuse de résine (1) avec de la résine est déterminé par détection de la température à l'aide d'un capteur de température (6) ou par surveillance d'une modification du couple appliqué à la rotation de la vis (2).

2. Procédé de contrôle de démarrage selon la revendication 1, comprenant en outre la communication, à un organe de commande (20) :
du nombre de filières (4) rattachées à l'extrudeuse de résine (1), et
de la quantité d'introduction cible de la résine, de la fréquence de rotation cible de la vis (2), de la faible quantité d'introduction au démarrage, de la basse fréquence de rotation au démarrage, et de la durée de démarrage, lors de la réalisation d'un moulage par extrusion avec la filière (4) ;
ledit organe de commande (20) contrôlant la quantité d'introduction de la résine et la fréquence de rotation de la vis (2).

3. Procédé de contrôle de démarrage selon la revendication 1 ou 2, dans lequel, lors de l'augmentation progressive de la quantité d'introduction de la résine à la quantité d'introduction cible et de l'augmentation progressive de la fréquence de rotation de la vis (2) à la fréquence de rotation cible, la fréquence de rotation de la vis (2) ne subit plus d'augmentation si la pression de résine dépasse une valeur admissible.

4. Dispositif de contrôle de démarrage, comprenant :
une extrudeuse de résine (1) comportant une vis (2) subissant une rotation sous l'effet d'un moteur (5) et une section de charge (3) de résine, l'extrudeuse de résine (1) extrudant de la résine fondue par le biais d'une filière (4),
un dispositif d'introduction de matière (10) qui introduit la résine dans la section de charge (3), et
un organe de commande (20) qui émet des commandes de contrôle destinées au moteur (5) et à une section d'introduction de matière (12) du dispositif d'introduction de matière (10) afin de contrôler la quantité d'introduction de la résine et la fréquence de rotation de la vis (2) ;
dans lequel l'organe de commande (20) est pourvu d'une section de communication permettant de communiquer la quantité d'introduction cible de la résine, la fréquence de rotation cible de la vis (2), une faible quantité d'introduction établie pour être inférieure à la quantité d'introduction cible, une basse fréquence de rotation établie pour être inférieure à la fréquence de rotation cible, et la durée de démarrage,
dans lequel, lors du démarrage de l'extrudeuse de résine (1) et jusqu'à ce que l'intérieur de l'extrudeuse de résine (1) soit rempli de résine, l'organe de commande contrôle le dispositif d'introduction de matière afin que la résine soit introduite avec ladite faible quantité d'introduction et contrôle la vis (2) afin qu'elle subisse une rotation à ladite basse fréquence de rotation,
dans lequel, après que l'intérieur de l'extrudeuse de résine (1) s'est rempli de résine, l'organe de commande augmente progressivement la quantité d'introduction de la résine et la fréquence de rotation de la vis (2),
dans lequel, une fois le terme d'une durée de démarrage définie atteint, l'organe de commande (20) fait passer la quantité d'introduction de la résine à la quantité d'introduction cible et fait passer la fréquence de rotation de la vis (2) à la fréquence de rotation cible, et
dans lequel le remplissage ou non de l'intérieur de l'extrudeuse de résine (1) avec de la résine est déterminé par détection de la température à l'aide d'un capteur de température (6) ou par surveillance d'une modification du couple appliqué à la rotation de la vis (2).

5. Dispositif de contrôle de démarrage selon la revendication 4, comprenant en outre un capteur de pression (7) qui capte la pression de la résine fondue et communique la pression de résine captée à l'organe de commande (20),
ledit organe de commande (20) disposant d'une fonction d'arrêt d'une commande d'augmentation de vitesse destinée au moteur (5) si la pression de résine dépasse une valeur admissible lors de l'émission de la commande d'augmentation de vitesse destinée au moteur (5).
